# EUROPÄISCHE PATENTSCHRIFT

(11) **EP 2 543 094 B1**
(45) Veröffentlichungstag und Bekanntmachung des Hinweises auf die Patenterteilung: **08.01.2014**
(21) Anmeldenummer: 11711265.6
(22) Anmeldetag: 01.03.2011
(51) Int. Cl.: H01M 2/10, H01M 2/20, H01M 10/50, H01M 10/0525

(54) **BATTERIE FÜR EINEN KRAFTWAGEN**
BATTERY FOR A CAR
BATTERIE POUR VÉHICULE AUTOMOBILE

(30) Priorität: 01.03.2010 DE 102010009731
(43) Veröffentlichungstag der Anmeldung: 09.01.2013
(73) Patentinhaber: Audi AG, 85045 Ingolstadt (DE)
(72) Erfinder: ENNING, Norbert, 85095 Denkendorf (DE)
(74) Vertreter: Herbst, Matthias Heinz
(86) Internationale Anmeldenummer: PCT/EP2011/000984
(87) Internationale Veröffentlichungsnummer: WO 2011/107250

(56) Entgegenhaltungen:
- EP-A1- 1 990 860
- WO-A1-2008/059123
- WO-A1-2009/103462
- DE-A1-102008 034 695
- JP-A- 11 111 260
- US-A1- 2003 193 313
- US-A1- 2006 145 657

## Beschreibung

Die Erfindung betrifft eine Batterie für einen Kraftwagen.

Für Kraftwagen mit elektrischem oder Hybridantrieb werden zunehmend leistungsstärkere Batterien benötigt. Um die der Batterie entnommenen Ströme zu begrenzen, finden zur Versorgung der Antriebsaggregate solcher Fahrzeuge Hochvoltbatterien mit Klemmenspannungen von mehreren 100 V Anwendung. Da die Klemmenspannungen einzelner elektrochemischer Zellen durch die jeweiligen Elektrodenpotenziale auf wenige Volt begrenzt sind, muss bei der Herstellung solcher Hochvoltbatterien eine Mehrzahl von elektrochemischen Zellen in Reihe geschaltet werden, um die gewünschte Gesamtklemmenspannung der Batterie zu erhalten. Die einzelnen Zellen der Batterie müssen daher aufwändig einzeln positioniert und elektrisch miteinander verbunden werden. Die Herstellung solcher Batterien ist daher teuer und aufwändig.

Die EP 1 990 860 A1 beschreibt eine Antriebsbatteriebaugruppe für ein elektrisch angetriebenes Fahrzeug, welche mit mehreren nach außen durch jeweils eigene Zellengehäuse geschlossenen, zu einem Zellenpaket zusammengefassten Batteriezellen und wenigstens einem Kühlfluid führenden Rohr zum Abtransport von Wärmeenergie der Batteriezellen versehen ist. Die Zellen sind dabei in einem Rahmen angeordnet, der mittels eines Deckels verschlossen ist. Am Boden des Rahmens sind Positionierelemente ausgebildet.

Aus der JP 11 111 260 A ist eine Batterie mit zwei Batteriezellen bekannt, welche über eine metallische Stange elektrisch miteinander gekoppelt sind. Die Stange hat Durchgangsöffnungen zur Aufnahme von zugeordneten Abgriffpolen der Zellen, wobei die Durchgangsöffnungen konisch ausgeführt sind.

Der Erfindung liegt somit die Aufgabe zugrunde, eine Batterie für einen Kraftwagen bereitzustellen, welche die gewünschten hohen Ausgangsspannungen liefern kann und gleichzeitig einfach herzustellen ist.

Diese Aufgabe wird durch eine Batterie mit den Merkmalen des Patentanspruchs 1 gelöst.

Eine solche Batterie für einen Kraftwagen umfasst wenigstens eine Zellengruppe mit einer Mehrzahl von elektrochemischen Zellen, so dass durch Reihenschaltung der einzelnen elektrochemischen Zellen die gewünschte Gesamtklemmenspannung der Batterie erreicht werden kann. Ferner ist jeder Zelle der Zellengruppe wenigstens ein Positionierelement zugeordnet, mittels welchem die jeweilige Zelle ausgerichtet und in einer Sollposition gehalten ist. Bei der Herstellung einer solchen Batterie müssen daher die einzelnen Zellen einer jeweiligen Zellengruppe nicht aufwändig präzise manuell nuell positioniert werden. Vielmehr genügt eine grobe Vorpositionierung der einzelnen Zellen, da bei der Montage die einzelnen Zellen durch die zugeordneten Positionierelemente in ihre Sollposition gebracht werden. Der Herstellungsaufwand bei der Fertigung einer derartigen Batterie ist daher besonders gering. Da die Vorpositionierung der Zellen bei der Fertigung nicht perfekt sein muss, ist die Herstellung einer derartigen Batterie besonders einfach automatisierbar. Die Batterie kann zudem besonders leicht gebaut werden, da das Halten der Zellen von den Positionierelementen mit über-nommen wird, so dass keine zusätzlichen Haltestrukturen benötigt werden

Erfindungsgemäß ist jeder Zellengruppe der Batterie ein Zellenträger zugeordnet, an welchem die Zellen mittels der jeweiligen Positionierelemente gehalten sind. Durch einen solchen modularen Aufbau sind solche Batterien besonders einfach zu fertigen, da die einzelnen Zellengruppen vormontiert werden können. Die einzelnen Zellengruppen mit ihren jeweiligen Zellenträgern können beispielsweise einfach gestapelt werden, um so die Batterie aufzubauen.

Erfindungsgemäß weisen die Positionierelemente eine Einführschräge zum Einführen jeweils zugeordneter Abgriffspole der Zellen auf. Eine solche Einführschräge ermöglicht die Zentrierung der Abgriffspole bezüglich der Positionierelemente und damit eine Ausrichtung von geringfügig fehlplatzierten Zellen beim Herstellen der Batterie. Die Einführschräge ist dabei zusätzlich leicht federnd gestaltet, so dass sie eine Rückstellkraft auf die Sollposition der Zellen hin ausübt, was die korrekte Positionierung der Zellen besonders einfach macht.

In einer bevorzugten Ausführungsform der Erfindung ist das wenigstens eine Positionierelement als elektrisches Kontaktelement ausgebildet, welches mit einem Abgriffspol der zugeordneten Zelle in elektrischer Verbindung steht. Hierdurch kann bei der Herstellung der Zelle auf aufwändige und teure Handarbeit verzichtet werden. Diese Ausführungsform bietet eine besonders gute Funktionsintegration, da ein einzelnes Bauteil, nämlich das Positionierelement, gleichzeitig der Halterung, Ausrichtung und elektrischen Verbindung der Zellen dient.

In einer bevorzugten Ausführungsform sind die Kontaktelemente durch elektrische Verbindungsmittel unter Ausbildung einer Reihenschaltung der Zellen einer Zellengruppe verbunden. Durch eine derartige Reihenschaltung werden die relativ geringen Klemmenspannungen der einzelnen Zellen aufad-diert, so dass sich einer höhere Gesamtklemmenspannung für eine jeweilige Zellengruppe ergibt. Liegen mehrere Zellengruppen vor, so können diese selbstverständlich ebenfalls in Reihenschaltung miteinander verbunden sein, um die Gesamtklemmenspannung weiter zu erhöhen. Dies ist gerade bei Batterien zur Versorgung von Antriebsaggregaten von elektrischen oder Hybridfahrzeugen notwendig, da bei höheren Gesamtklemmenspannungen der Batterie bei gleicher Leistungsentnahme geringere Ströme fließen. Durch den geringeren Stromfluss können elektrische Verbindungsmittel mit geringerem Querschnitt verwendet werden, so dass Kraftwagen mit einer solchen Batterie besonders leicht gebaut werden können.

In einer bevorzugten Ausführungsform der Erfindung sind die Kontaktelemente der Zellen mit den jeweils zugeordneten Abgriffspolen verschweißt. Das ermöglicht einen besonders sicheren Sitz der Einzelzellen in der Batterie, so dass sich die elektrischen Kontakte zwischen den Einzelzellen und den Kontaktelementen nicht lösen können. Dies ist insbesondere bei Kraftwagenbatterien von Bedeutung, da im Fahrbetrieb des Kraftwagen solche Batterien starken Schwingungsbelastungen ausgesetzt sind, die rein kraftschlüssige Verbindungen zwischen den Abgriffspolen und den Kontaktelementen mit der Zeit lockern könnten. Bei der Reihenschaltung der Zellen in herkömmlichen Batterien würde bereits der Kontaktverlust einer einzelnen Zelle den Totalausfall der Batterie bedingen. Dies wird durch diese Ausführungsform vermieden.

Erfindungsgemäß umfasst der wenigstens eine Zellenträger ein Rahmenelement und ein Deckelteil, wobei die Zellen zwischen dem Rahmenelement und dem Deckelteil aufgenommen sind. Das Rahmenelement stellt Aufnahmeräume für die einzelnen Zellen bereit, durch die die Zellen bereits grob vororientiert werden, und trägt das Gewicht der Zellen.

Erfindungsgemäß weist das Deckelteil des Zellenträgers einen Grundkörper aus Kunststoff auf, mit dem die Positionierungselemente vergossen sind. Vorzugsweise sind auch die Kontaktelemente und/oder die elektrischen Verbindungsmittel mit dem Grungkörper vergossen. Positionie-rungselemente, Kontaktelemente und/oder elektrische Verbindungsmittel sind somit in dieser Ausführungsform besonders fest und sicher mit dem Zellenträger verbunden, so dass sich auch diese Elemente nicht aufgrund der bereits geschilderten Schwingungsbelastungen einer solchen Batterie im Fahrbetrieb eines Kraftwagens lockern oder lösen können. Eine solche Batterie ist daher besonders betriebssicher. Bei der Herstellung einer derartigen Batterie werden die Zellen zunächst in das Rahmenelement eingestellt und anschließend das Deckelteil aufgesetzt. Beim Aufsetzen des Deckelteils werden die Zellen gleichzeitig in ihre Sollposition gebracht und elektrisch kontaktiert.

Vorzugsweise weist der wenigstens eine Zellenträger eine Kühlmittelleitung zum Kühlen der Batterie auf. Auch diese ist zweckmäßigerweise in das Deckelteil des Zellenträgers integriert, insbesondere eingegossen. Aufgrund der hohen Leistungsentnahme durch elektrisch Antriebsaggregate erwärmen sich die einzelnen Zellen einer derartigen Batterie im Fahrbetrieb. Bei höheren Temperaturen sinkt jedoch die Lebensdauer der einzelnen Zellen, so dass durch eine derartige Kühlung der Batterie die Lebensdauer durch die Vermeidung wärmebedingter Schädigungen sichergestellt wird.

In einer weiteren bevorzugten Ausführungsform ist zwischen den Zellen einer Zellengruppe und dem Zellenträger ein Luftspalt vorgesehen. Dies kann sowohl allein als auch in Verbindung mit der bereits geschilderten aktiven Kühlung Anwendung finden. Durch den Luftspalt ist eine Wärmeabfuhr von den Einzelzellen durch Konvektion ermöglicht, was ebenfalls wärmebedingten Schädigungen entgegenwirkt. Auch zwischen jeweils benachbarten Zellen einer Zellengruppe kann ein solcher Luftspalt vorgesehen sein. Gleichzeitig verhindern solche Luftspalten Verspannungen zwischen den Zellen und ihren zugeordneten Kontaktelementen, das Raum für einen thermische Ausdehnung gegeben ist.

Die Erfindung betrifft ferner einen Kraftwagen mit einer Batterie der beschriebenen Art. Aufgrund der geringen Herstellungskosten solcher Batterien ist auch ein derartiger Kraftwagen kostengünstig in seiner Herstellung.

Im Folgenden soll die Erfindung und ihre Ausführungsformen anhand der Zeichnung näher erläutert werden. Hierbei zeigen:
- Fig. 1.: eine perspektivische Ansicht eines Ausführungsbeispiels einer erfindungsgemäßen Batterie; und
- Fig. 2: eine Schnittdarstellung durch den Verbindungsbereich zweier elektrochemischer Zellen einer derartigen Batterie mit einem Zellenträger der Batterie.

Eine im Ganzen mit 10 bezeichnete Hochvoltbatterie für einen Kraftwagen ist aus einer Mehrzahl einzelner Lithiumionenzellen 12 aufgebaut, die der Über-sichtlichkeit halber in der Figur nicht alle bezeichnet sind. Um die gewünschte Klemmenspannung von mehreren hundert Volt zu erreichen, sind die Lithiumionenzellen 12 in Reihe geschaltet.

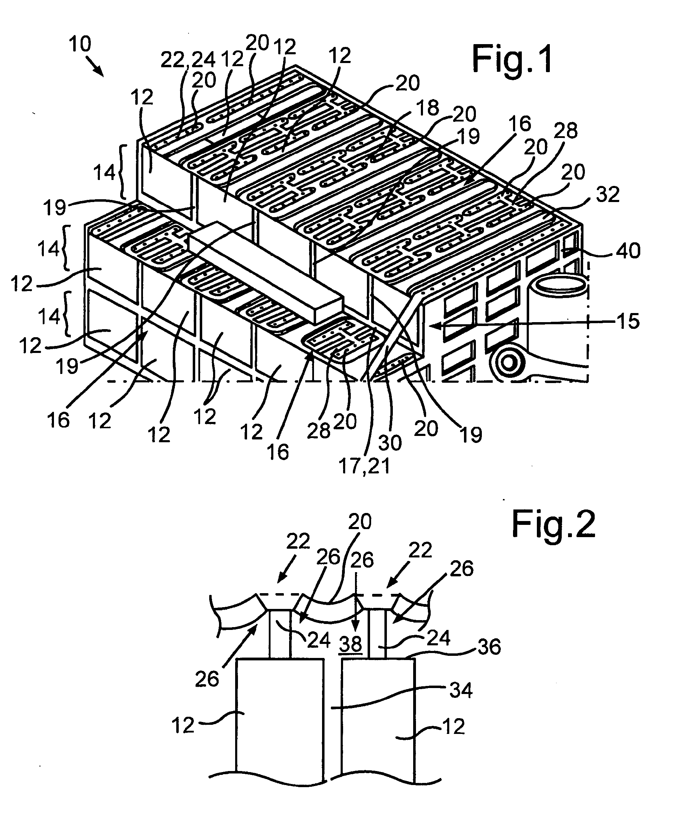

Die einzelnen Zellen 12 sind zu Zellengruppen 14 zusammengefasst und sind durch einen gemeinsamen Träger 15 gehalten. Der Träger besteht aus einem Grundgerüst 17 sowie einer Deckelplatte 16. Stege 19, die von einem Boden 21 des Grundgerüsts 17 abragen, begrenzen Aufnahmen für die einzelnen Zellen 12. In einen Kunststoffgrundkörper 18 der Deckelplatte 16 sind elektrische Kontaktelemente 20 eingegossen sind, die ebenfalls in der Figur nicht alle bezeichnet sind. Die Kontaktelemente 20 weisen Öffnungen 22 auf, in die, wie in der Schnittdarstellung in Fig. 2 besonders gut zu erkennen ist, die Anschlusspole 24 der Einzelzellen 12 eingeführt sind. Die Öffnungen der Kontaktelemente 20 besitzen eine Einführschräge 26, die das Einführen der Anschlusspole 24 erleichtert.

Um eine Zellengruppe 14 zusammenzufügen, brauchen die Einzelzellen 12 der Zellengruppe 14 daher nur grob vororientiert werden, indem sie in die durch die Stege 19 abgegrenzten Aufnahmen des Trägers 15 eingestellt werden. Beim Aufsetzen der Deckelplatte 16 werden die Einzelzellen 12 durch die Wechselwirkung zwischen ihren Abgriffspolen 24 und der Einführschräge 26 der Kontaktelemente 20 von selbst korrekt ausgerichtet. Dadurch ist die Herstellung einer solchen Batterie 10 besonders gut automatisierbar.

Die Kontaktelemente 22, die benachbarte Einzelzellen 12 kontaktieren, sind über Brücken 28 elektrisch leitend miteinander verbunden, so dass sich eine Reihenschaltung der Einzelzellen 12 in den Zellengruppen 14 ergibt. Durch weitere Verbindungselemente 30 sind die einzelnen Zellengruppen 14 wiederum im Sinne einer Reihenschaltung miteinander verbunden, so dass trotz der geringen Klemmenspannung üblicher Einzelzellen, beispielsweise etwa 1,7 V bei Lithiumionenzellen, eine Gesamtspannung der Batterie von mehreren hundert Volt erreicht werden kann.

Da sich die Einzelzellen 12 bei der im Betrieb einer solchen Batterie 10 zur Versorgung eines elektrischen Antriebsaggregats eines Kraftwagens gegebenen Leistungsentnahme stark erwärmen, weisen die Deckelplatten 16 der Zellengruppen 14 zudem schlangenförmige Kühlmittelleitungen 32 auf, die sich über die gesamte Fläche der Deckelplatten 16 erstrecken. Im Betrieb der Batterie 10 werden diese mit einem Kühlmedium durchströmt, um die in den Einzelzellen 12 anfallende Wärme abzuführen.

Die Anordnung der Kühlmittelleitungen 32 in den Trägerplatten 16, die auf Seiten der Abgriffspole 24 der Einzelzellen 12 auf die Einzelzellen 12 aufgesetzt sind, ist besonders zweckmäßig, da in der unmittelbaren Umgebung der Abgriffspole 24 besonders viel Wärme anfällt. Um auch aus anderen Bereichen der Einzelzellen Wärme abführen zu können, ist zwischen benachbarten Einzelzellen 12 ein Luftspalt 34 vorgesehen. Auch zwischen einer Stirnfläche 36 der Einzelzellen und der Deckelplatte 16 ist ein Luftspalt 38 vorgesehen. Durch die Luftspalte 34, 38 kann Wärme zusätzliche durch Konvektion von den Einzelzellen 12 abgeführt werden.

In die Deckelplatte 16 können noch weitere Elemente der Batterie 10 integriert werden. Beispielsweise ist es möglich, eine Steuervorrichtung mit dem Kunststoffgrundkörper der Deckelplatte 16 zu vergießen, die es ermöglicht, beim Laden oder Entladen der Batterie 10 den Ladezustand der Einzelzellen 12 zu balancieren, was die Lebensdauer solcher Batterien 10 beträchtlich erhöht. Auch Ableitungsöffnungen im Bereich von Entgasungsventilen der Zellen 12 können in die Deckelplatte 16 integriert werden.

Die einzelnen Zellengruppen 14 können durch ein Rahmenelement 40 zusammengefasst und an Karosseriebauteilen des Kraftwagens befestigt werden. Zwischen den einzelnen Zellengruppen 14 sind keine weiteren mechanischen Verbindungen notwendig, sie können einfach innerhalb der Rahmenstruktur 40 aufeinander gestapelt werden, was eine besonders einfache Herstellung der Batterie 10 ermöglicht.

## Patentansprüche

1. Batterie (10) für einen Kraftwagen, mit wenigstens einer Zellengruppe (14) mit einer Mehrzahl von elektrochemischen Zellen (12), wobei jeder Zelle (12) der Zellengruppe (14) wenigstens ein Positionierelement (20) zugeordnet ist, mittels welchem die jeweilige Zelle (12) ausgerichtet und in einer Sollposition gehalten ist, wobei
die Batterie (10) wenigstens einen Zellenträger (15) zum Halten der Zellen (12) der wenigstens einen Zellengruppe (14) aufweist und die Positionierelemente (20) an dem Zellenträger angeordnet sind, und wobei der wenigstens eine Zellenträger (15) ein Rahmenelement (17) sowie ein Deckelteil (16) umfasst und die Zellen zwischen Rahmenelement (17) und Deckelteil (16) aufgenommen sind,
**dadurch gekennzeichnet, dass**
die Positionierelemente (20) eine Einführschräge zum Einführen eines jeweils zugeordneten Abgriffspols (24) der Zellen (12) aufweisen, wobei die Einführschräge federnd ausgebildet ist, sodass sie zur korrekten Positionierung der Zellen eine Rückstellkraft auf die Sollposition der Zellen (12) hin ausübt, und wobei
das Deckelteil (16) einen Grundkörper (18) aus Kunststoff aufweist, mit dem die Positionierelemente (20) vergossen sind.

2. Batterie (10) nach Anspruch 1,
**dadurch gekennzeichnet, dass**
das wenigstens eine Positionierelement (20) als elektrisches Kontaktelement (20) ausgebildet ist, welches mit einem Abgriffspol (24) der Zelle (12) in elektrischer Verbindung steht.

3. Batterie (10) nach Anspruch 2,
**dadurch gekennzeichnet, dass**
die Kontaktelemente (20) durch elektrische Verbindungsmittel (28) unter Ausbildung einer Reihenschaltung der Zellen (12) einer Zellengruppe (14) verbunden sind.

4. Batterie (10) nach einem der Ansprüche 2 oder 3,
**dadurch gekennzeichnet, dass**
die Kontaktelemente (20) mit den Abgriffspolen (24) verschweißt sind.

5. Batterie(10) nach einem der vorhergehenden Ansprüche,
**dadurch gekennzeichnet, dass**
mit dem Grundkörper (18) aus Kunststoff zusätzlich Kontaktelemente (20) und/oder elektrische Verbindungsmittel (28) vergossen sind.

6. Batterie (10) nach einem der vorhergehenden Ansprüche,
**dadurch gekennzeichnet, dass**
das Deckelteil (16) eine eingegossene Kühlmittelleitung (32) zum Kühlen der Batterie (10) aufweist.

7. Batterie (10) nach einem der vorhergehenden Ansprüche,
**dadurch gekennzeichnet, dass**
zwischen den Zellen (12) einer Zellengruppe (14) und dem Deckelteil (16) ein Luftspalt (38) vorgesehen ist.

8. Batterie (10) nach einem der Ansprüche 1 bis 7,
**dadurch gekennzeichnet, dass**
zwischen jeweils benachbarten Zellen (12) einer Zellengruppe (14) ein Luftspalt (34) vorgesehen ist.

9. Kraftwagen mit einer Batterie (10) nach einem der Ansprüche 1 bis 8.

## Claims

1. Battery (10) for a motor vehicle, comprising at least one cell group (14) having a plurality of electrochemical cells (12), each cell (12) of the cell group (14) being assigned at least one positioning element (20) which orients and holds each cell (12) in a desired position, the battery (10) comprising at least one cell support (15) for holding the cells (12) of the at least one cell group (14) and the positioning elements (20) being arranged on the cell support, and the at least one cell support (15) having a frame element (17) and a cover part (16) and the cells being received between said frame element (17) and cover part (16), **characterised in that** the positioning elements (20) comprise an insertion bevel for inserting a tapping terminal (24) assigned to each of the cells (12), the insertion bevel being spring-loaded such that, in order to position the cells correctly, it exerts a restoring force on the desired position of the cells (12), and the cover part (16) comprising a main body (18) made of plastics material, by means of which the positioning elements (20) are sealed.

2. Battery (10) according to claim 1, **characterised in that** at least one positioning element (20) is formed as an electrical contact element (20) which is electrically connected to a tapping terminal (24) of the cell (12).

3. Battery (10) according to claim 2, **characterised in that** the contact elements (20) are connected by means of electrical connecting means (28) connecting the cells (12) of a cell group (14) in series.

4. Battery (10) according to either claim 2 or claim 3, **characterised in that** the contact elements (20) are welded to the tapping terminals (24).

5. Battery (10) according to any of the preceding claims, **characterised in that** contact elements (20) and/or electrical connecting means (28) are also sealed by the main body (18), which is made of plastics material.

6. Battery (10) according to any of the preceding claims, **characterised in that** the cover part (16) comprises an integrally-cast coolant line (32) for cooling the battery (10).

7. Battery (10) according to any of the preceding claims, **characterised in that** an air gap (38) is provided between the cells (12) of a cell group (14) and the cover part (16).

8. Battery (10) according to any of claims 1 to 7, **characterised in that** an air gap (34) is provided between each adjacent cell (12) of a cell group (14).

9. Motor vehicle comprising a battery (10) according to any of claims 1 to 8.

## Revendications

1. Batterie (10) pour un véhicule automobile, comprenant au moins un groupe de cellules (14) comprenant une multitude de cellules (12) électrochimiques, où au moins un élément de positionnement (20) est associé à chaque cellule (12) du groupe de cellules (14), au moyen duquel élément de positionnement la cellule (12) respective est orientée et est maintenue dans une position de consigne, où
la batterie (10) présente au moins un support de cellules (15) servant à maintenir les cellules (12) du groupe de cellules (14) au moins au nombre de un et les éléments de positionnement (20) sont disposés au niveau du support de cellules, et où
le support de cellules (15) au moins au nombre de un comprend un élément de cadre (17) ainsi qu'une partie de recouvrement (16) et les cellules sont logées entre l'élément de cadre (17) et la partie de recouvrement (16),
**caractérisée en ce**
**que** les éléments de positionnement (20) présentent un biseau d'insertion servant à insérer une borne de prise (24) respectivement associée des cellules (12), où le biseau d'insertion est réalisé de manière à être élastique de sorte qu'il exerce une force de rappel en direction de la position théorique des cellules (12) aux fins du positionnement en bonne et due forme des cellules, et où
la partie de recouvrement (16) présente un corps de base (18) en matière plastique, auquel les éléments de positionnement (20) sont scellés.

2. Batterie (10) selon la revendication 1,
**caractérisée en ce**
**que** l'élément de positionnement (20) au moins au nombre de un est réalisé sous la forme d'un élément de contact électrique (20), qui est relié de manière électrique à une borne de prise (24) de la cellule (12).

3. Batterie (10) selon la revendication 2,
**caractérisée en ce**
**que** les éléments de contact (20) sont reliés par des moyens de raccordement électriques (28) en formant un branchement en série des cellules (12) d'un groupe de cellules (14).

4. Batterie (10) selon l'une quelconque des revendications 2 ou 3,
**caractérisée en ce**
**que** les éléments de contact (20) sont soudés aux bornes de prise (24).

5. Batterie (10) selon l'une quelconque des revendications précédentes,
**caractérisée en ce**
**qu'**en supplément des éléments de contact (20) et/ou des moyens de raccordement électriques (28) sont scellés au corps de base (18) en matière plastique.

6. Batterie (10) selon l'une quelconque des revendications précédentes,
**caractérisée en ce**
**que** la partie de recouvrement (16) présente une conduite de réfrigérant (32) coulée dans cette dernière, servant à refroidir la batterie (10).

7. Batterie (10) selon l'une quelconque des revendications précédentes,
**caractérisée en ce**
**qu'**un entrefer (38) est prévu entre les cellules (12) d'un groupe de cellules (14) et la partie de recouvrement (16).

8. Batterie (10) selon l'une quelconque des revendications 1 à 7,
**caractérisée en ce**
**qu'**un entrefer (34) est prévu entre des cellules (12) respectivement adjacentes d'un groupe de cellules (14).

9. Véhicule automobile doté d'une batterie (10) selon l'une quelconque des revendications 1 à 8.
